# EUROPEAN PATENT SPECIFICATION

(11) **EP 3 405 535 B1**
(45) Date of publication and mention of the grant of the patent: **10.03.2021**
(21) Application number: 17700703.6
(22) Date of filing: 20.01.2017
(51) Int. Cl.: C09D 17/00

(54) **UNIVERSAL PIGMENT PREPARATIONS FOR POINT-OF-SALE USE**
UNIVERSALPIGMENTPRÄPARATIONEN ZUR VERWENDUNG AN EINER VERKAUFSSTELLE
PRÉPARATIONS DE PIGMENT UNIVERSEL POUR UTILISATION DE POINT DE VENTE

(30) Priority: 22.01.2016 EP 16152442; 09.09.2016 EP 16188192
(43) Date of publication of application: 28.11.2018
(73) Proprietor: BASF SE, 67056 Ludwigshafen am Rhein (DE)
(72) Inventor: REISACHER, Hansulrich, 67059 Ludwigshafen (DE); CHAKRABARTI, Nilanjan, Highland Heights 41076 (US); ONCLIN, Steffen, 67056 Ludwigshafen (DE); MAUTHE, Uwe, 67056 Ludwigshafen (DE)
(74) Representative: BASF IP Association
(86) International application number: PCT/EP2017/051199
(87) International publication number: WO 2017/125556

(56) References cited:
- EP-A1- 0 943 667
- US-A1- 2005 155 521
- US-A1- 2011 120 346

## Description

The present invention relates to aqueous pigment preparations, the production thereof, and their use for the coloring of coating materials, like paints, varnishes or renders, preferably for point-of-sale (POS) tinting or in in-plant tinting systems.

### BACKGROUND OF THE INVENTION

Liquid systems, such as coating materials, varnishes, emulsion paints, and printing inks are customarily pigmented using pigment preparations which comprise water, organic solvent or combinations thereof. In addition to anionic, cationic, nonionic or amphoteric dispersants, these pigment preparations must generally be admixed with further auxiliaries, such as humectants, agents for increasing the freeze resistance, thickeners, preservatives and defoamers, for stabilization.

Such pigment preparations are employed as tinting pastes in retail stores and professional decorating businesses, and, using metering and tinting systems, are added to aqueous and solventborne inks and paints in order to set customer-specific shades. Such pigment preparations are usually called universal pigment preparations, as they may be used for both aqueous/waterborne and solventborne coating materials. For the precise setting of a particular shade, the tinting pastes are generally metered volumetrically.

In order to comply with the guidelines for awarding of various eco labels, inks and paints have for some time advantageously been given low-VOC (volatile organic compounds) or VOC-free formulations. The same standards are also desired for the pigment preparations which are mixed in at the point of sale to the low-VOC or VOC-free inks and paints.

US-A-5,340,394 teaches VOC-free pigment concentrates based on linear polyethylene glycol polyethers with molecular weights of 190 to 700 and nonionic alkyl glycosides for use at the point of sale. The pigment concentrates are described as being especially suitable for latex paints and alkyd paints, and additionally these pigment concentrates are said to be blocking-resistant.

US-A-2006/0207476 and US-A-2010/0113685 describe low-VOC universal pigment pastes which are stable, which have favorable rheology, and which are suitable for aqueous emulsion paints and for solventborne alkyd paints. The pastes may be provided in closed containers which allow simple metering in controlled quantities. These pastes contain not only solvent-compatible surfactants but also latex-compatible surfactants, such as alkyl polyethylene glycol ethers, secondary alcohol ethoxylates, difunctional propylene oxide/ethylene oxide block polymers (with secondary OH groups), ethylene oxide/propylene oxide block copolymers, alkylaryl polyglycol ethers, or amine salts of hydrophilic copolymers of polycarboxylic acids.

WO-A-2014/000842 teaches aqueous universal pigment preparations based on fatty acid condensation products and nonionic surfactants. The pigment preparations are described as being stable in their viscosity, foam, and sedimentation behavior after storage at 60°C for one week.

WO-A-2011/151277 teaches low-VOC aqueous universal pigment preparations which are described as being suitable for preventing the drying of the preparations in open nozzles of the paint-mixing systems, and also for producing coatings of certain hardness. The pigment preparations comprise stabilizers, examples being ethoxylated fatty acid monoethanolamides, anionic surfactants based on tristyrylphenol-polyglycol ether phosphate esters, or phospholipid-based surfactants, rheological additives based on clay minerals, and also nonvolatile, organic solvents such as polyethylene glycols PEG 200 or PEG 400.

US-A-2012/0316273 describes a point-of-sale system for aqueous emulsion paints that is composed of a plurality of liquid pigment preparations which are described as being suitable for preventing the drying of the preparations in open nozzles of the metering systems. The pigment preparations comprise a polyalkylene glycol as humectant, an ethoxylated surfactant, and filler.

EP 0 943 667 A1 discloses aqueous pigment compositions comprising a non-ionic alkylene oxide adduct and a phosphoric ester. It is mentioned that reaction products of alkylene oxides with α,ω-aminopolyether (=polyamine) were suitable for use as the non-ionic alkylene oxide adduct.

US 2005/155521 A1 discloses polyalkyleneimines having alkoxy units and anionic groups as well as their use as dispersants for pigments.

US 2011/120346 A1 discloses an aqueous pigment paste comprising a color pigment, a surface-active additive based on a phosphoric or phosphonic ester, a nonionic, surface-active additive based on hydroxyl-containing acetylene or acetylene alkoxylate and a solvent comprising water.

Despite the proposals in the prior art of a multiplicity of compounds as additives for universal pigment preparations, there continues to be a need for effective additive combinations for such pigment preparations, satisfying the requirements of precise volumetric metering and at the same time the desired coloristic properties.

Moreover, environmentally objectionable substances and also sensitizing substances ought largely to be avoided.

European directives and laws are requiring not only ever-lower VOC contents of less than 1000 ppm but also low SVOC contents (i.e., low levels of semivolatile organic compounds). Analytically, the VOC contents and SVOC contents are determined by means of GC-MS in accordance with DIN ISO 11890-2 (in-can measurement in ppm).

This therefore necessitates an entirely new assessment of the additives, since many additives undergo decomposition under the ISO 11890-2 conditions, starting at about 200°C to 367°C (387°C: boiling point of C₂₂H₄₆ (n-docosane)), and therefore simulate a VOC and/or SVOC content.

Further requirements of European directives and laws call for the absence of additives which have an environmental hazard potential in accordance with the CLP Regulation (EC) No. 1272/2008 concerning the Classification, Labeling and Packaging of substances and mixtures. Additives with H400 hazard statements are approved only with very great restrictions for use in paints. Alkylphenol ethoxylates (APEOs) are likewise no longer approved in EU Directive 2003/53/EC.

Furthermore, the use of the customary surfactants based on fatty alcohol alkoxylates with less than 20 alkylene oxide units, or on amino compounds, is restricted. Surfactants with H318 classification (causing severe skin burns and eye damage) can no longer be used in the quantities needed.

Moreover, compounds having H317 classification, which may give rise to allergic skin reactions, can be used only at a maximum of 0.1 wt%.

Therefore, the object of the present invention was to provide stable universal pigment preparations which are distinguished by ultimately advantageous performance properties, especially high color strength, easy stir-in dispersibility in a wide variety of application media, and/or, over a prolonged period of time, exhibit no drying either in the containers or in the metering system, especially in nozzles. The pigment preparations should also exhibit no rubout, in the context of the coloring of the various emulsion paints or solventborne varnishes.

A further object was to provide aqueous universal pigment preparations which pose a low environmental hazard, in other words preparations which are low in VOC and low in SVOC and which also contain largely no environmentally objectionable substances and sensitizing substances, in other words containing no substances liable for labeling in accordance with various eco labels, as for example in accordance with the CLP Regulation (EC) No. 1272/2008.

### SUMMARY OF THE INVENTION

It has now been found that aqueous pigment preparations which comprise a combination of a polyamine and an additive based on a lecithin, an anionic phosphoric ester and/or phosphonic ester and having the desired properties may be obtained.

Accordingly, a first aspect of the present invention relates to a pigment preparation which pigment preparation comprises, based in each case on the total weight of the preparation,
(A) 1 to 80 wt% of a pigment component containing a pigment and optionally a filler;
(B) 0.01 to 10 wt% of a water-soluble additive containing at least one polyamine B, which is selected from the group consisting of poly-C₂-C₃-alkyleneimines modified by poly-(C₂-C₄-alkyleneether) groups, poly-C₂-C₃-alkyleneimines modified by poly-(C₂-C₄-alkyleneether) groups and ester groups, poly-(C₂-C₄-alkyleneether) modified melamines and mixtures thereof;
(C) 0.01 to 8 wt% of an additive based on a lecithin and/or an anionic additive based on a phosphoric ester and/or phosphonic ester;
(D) 0 to 20 wt% of further additives for producing an aqueous pigment preparation; and
(E) water,
where the sum of the percentages by weight of components (A) to (E) makes 100 wt%.

Further provided is a method for producing a pigment preparation of the invention, where first of all components (A) to (C) and at least part of component (D) are introduced into water, the resulting suspension is subjected to wet comminution, and optionally the remaining amount of component (D) is subsequently added to the suspension.

The present invention further provides the use of the pigment preparation of the present invention for coloring coating materials, preferably paints, varnishes or renders, especially for point-of-sale tinting or in in-plant tinting systems.

### DETAILED DESCRIPTION OF THE INVENTION

The term "pigment component" relates to pigments and mixtures of at least one pigment and at least one filler.

The prefix Cₙ-Cₘ indicates the number of carbon atoms a radical or compound may have. For example, the prefix C₁-C₄ indicates that the radical, moiety or compound may have from 1 to 4 carbon atoms.

Alkyl, e.g., C₁-C₁₀-alkyl, C₁-C₁₂-alkyl, C₁-C₂₀-alkyl, C₆-C₂₀-alkyl, C₈-C₂₂-alkyl or C₁-C₃₀-alkyl, may be within the given limits of carbon atoms linear or branched, where possible. Examples are methyl, ethyl, n-propyl, 2-propyl, n-butyl, 2-butyl, isobutyl, 1,1-dimethylethyl, n-pentyl, 2-pentyl, neopentyl, n-hexyl, 2-hexyl, 2-methylpentyl, 1,3-dimethylbutyl, 1-ethylbutyl, 2-ethylbutyl, n-heptyl, 1-methylhexyl, 2-methylhexyl, 3-methylhexyl, 4-methylhexyl, 5-methylhexyl, 1-ethylpentyl, 2-ethylpentyl, 3-ethylpentyl, n-octyl, 1-methylheptyl, 2-methylheptyl, 1-ethylhexyl, 2-ethylhexyl, 1,2-dimethylhexyl, 1-propylpentyl, 2-propylpentyl, n-nonyl, n-decyl, n-undecyl, n-dodecyl, n-tridecyl, n-tetradecyl, n-pentadecyl, n-hexadecyl, n-heptadecyl, n-octadecyl, n-eicosyl, n-heneicosyl, n-docosyl (behenyl), n-tetracosyl (lignoceryl), n-pentacosyl and constitutional isomers of the aforementioned n-alkyl radicals.

Alkenyl, e.g., C₈-C₂₂-alkenyl, may be within the given limits of carbon atoms linear or branched, where possible, and may have 1, 2, 3 or 4 C=C double bonds.

Alkylene denominates linear or branched, saturated bivalent hydrocarbon radicals having usually 1 to 4 carbon atoms, such as methylene, 1,2-ethandiyl, 1,1-ethandiyl, 1,1-propandiyl, 1,2-propandiyl, 2,2-propandiyl, 1,3-propandiyl, 2-methyl-2,3-propandiyl, 1,1-butandiyl, 1,2-butandiyl, 2,2-butandiyl, 2,3-butandiyl, 1,3-butandiyl and 1,4-butandiyl.

The term C₂-C₄-alkan-1,2-diyl denominates a bivalent hydrocarbon radical having from 2 to 4 carbon atoms. Examples of C₂-C₄-alkan-1,2-diyl include ethan-1,2-diyl (ethylene), propan-1,2-diyl (propylene), butan-1,2-diyl, and 2-methylpropan-1,2-diyl.

The term "poly-(C₂-C₄-alkyleneether) modified" indicates a compound or group of compounds, which have been modified such that they carry at least one poly-(C₂-C₄-alkyleneether) radical. For example, compounds having primary and/or secondary amino groups can be modified by reacting them with a C₂-C₄-alkyleneoxide, thereby replacing at least one of their hydrogen atoms by a poly-(C₂-C₄-alkyleneether) radical. For example, compounds, which bear at least one acetal, aminal, semiacetal, semiaminal or carbamate group can be modified by reacting them with a hydroxyl terminated poly-(C₂-C₄-alkyleneether), thereby replacing a hydroxyl group in the semiacetal or semiaminal group or an alkoxy group of the acetal, aminal or carbamate group by a poly-(C₂-C₄-alkyleneether) radical.

The term "essentially VOC free" or "low VOC" means a concentration of volatile, organic compounds of less than 1000 ppm according to DIN ISO 11890-2.

The term "essentially SVOC free" or "low SVOC" means a concentration of semivolatile organic compounds of less than 5000 ppm according to DIN ISO 11890-2.

The term "point-of-sale" means a site at which custom-mixed paints, varnishes or renders are tinted and mixed in small lots for sale to end-users.

The terms "a", "an", "the", "at least one", and "one or more" are used interchangeably. Thus, for example, a pigment preparation that contains "a" pigment means that the pigment preparation may include "one or more" pigments.

The instant pigment preparations contain as essential constituents the pigment component (A), a water-soluble additive (B), an additive based on a lecithin and/or an anionic additive based on a phosphoric ester and/or phosphonic ester (C) and water. In addition, further additives other than those of components (B) and (C) may be present to form component (D). D may include humectants, rheology additives like thickeners, further dispersants like nonionic additives based on polyethers, wetting agents, defoamers, foam suppressants, preservatives like biocides or fungizides, anti-flocculants, pigment synergists, buffer substances, pH regulators and the like. The components (D) differ from components (B) and (C). It will be understood that all the constituents sum up to 100 wt% of the pigment preparation.

Preferred is a pigment preparation, where a combination of (B) and (C) consisting of (B) being modified melamines and (C) being an anionic additive based on a phosphoric ester and/or phosphonic ester is excluded.

As component (A), organic pigments, inorganic pigments and effect pigments, like luster pigments or pearlescent pigments, and fillers may be present in the pigment preparations of the present invention. It will be understood that the pigment preparations may also comprise any combinations thereof.

Component (A) preferably comprises at least one pigment and at least one filler. The pigments are customarily present in finely divided form. Accordingly, the pigments typically have average particle sizes in the range of from 0.1 µm to 5 µm. The weight average particle diameter is usually determined by light scattering methods, e.g., by the method of ISO 13320:2009. The weight average particle diameter may be also determined by sieving analysis.

Organic pigments typically comprise organic color and black pigments. Inorganic pigments may likewise be color pigments (chromatic, black and white pigments) and inorganic pigments.

Examples of suitable organic pigments include azo pigments, disazo pigments, disazo condensation pigments, anthanthrone pigments, anthraquinone pigments, anthrapyrimidine pigments, quinacridone pigments, quinophthalone pigments, diketopyrrolopyrrole pigments, dithioketopyrrolopyrrole pigments, dioxazine pigments, flavanthrone pigments, indanthrone pigments, isoindoline pigments, isoindolinone pigments, isoviolanthrone pigments, metal complex pigments, perinone pigments, perylene pigments, phthalocyanine pigments, pyranthrone pigments, pyrazoloquinazolone pigments, indigo pigments, thioindigo pigments, triarylcarbonium pigments and combinations thereof.

Suitable examples include the following:
- Monoazo pigments: C.I. Pigment Yellow 1, 3, 62, 65, 73, 74, 97, 183 and 191; C.I. Pigment Orange 5, 38 and 64; C.I. Pigment Red 1, 2, 3, 4, 5, 23, 48:1, 48:2, 48:3, 48:4, 49, 49:1, 51, 51:1, 52:1, 52:2, 53, 53:1, 53:3, 57:1, 58:2, 58:4, 63, 112, 146, 148, 170, 184, 187, 191:1, 210, 245, 247 and 251;
- Disazo pigments: C.I. Pigment Yellow 12, 13, 14, 16, 17, 81, 83, 106, 113, 126, 127, 155, 170, 174, 176 and 188; C.I. Pigment Orange 16, 34 and 44;
- Disazo condensation pigments: C.I. Pigment Yellow 93, 95 and 128; C.I. Pigment Red 144, 166, 214, 220, 221, 242 and 262; C.I. Pigment Brown 23 and 41;
- Anthanthrone pigments: C.I. Pigment Red 168;
- Anthraquinone pigments: C.I. Pigment Yellow 147 and 199; C.I. Pigment Red 177;
- Anthrapyrimidine pigments: C.I. Pigment Yellow 108;
- Benzimidazolone pigments: C.I. Pigment Yellow 120, 151, 154, 180, 181; C.I. Pigment Orange 36 and 72, C.I. Pigment Red 175, 185, 208; C.I. Pigment Brown 25; C.I. Pigment Violet 32;
- Quinacridone pigments: C.I. Pigment Orange 48 and 49; C.I. Pigment Red 122, 202, 206 and 209; C.I. Pigment Violet 19;
- Quinophthalone pigments: C.I. Pigment Yellow 138;
- Diketopyrrolopyrrole pigments: C.I. Pigment Orange 71, 73 and 81; C.I. Pigment Red 254, 255, 264, 270 and 272;
- Dioxazine pigments: C.I. Pigment Violet 23;
- Flavanthrone pigments: C.I. Pigment Yellow 24;
- Indanthrone pigments: C.I. Pigment Blue 60 and 64;
- Isoindoline pigments: C.I. Pigment Yellow 139 and 185; C.I. Pigment Orange 61 and 69, C.I. Pigment Red 260;
- Isoindolinone pigments: C.I. Pigment Yellow 109, 110 and 173;
- Isoviolanthrone pigments: C.I. Pigment Violet 31;
- Metal complex pigments: C.I. Pigment Red 257; C.I. Pigment Yellow 117, 129, 150, 153 and 177; C.I. Pigment Green 8;
- Perinone pigments: C.I. Pigment Orange 43; C.I. Pigment Red 194;
- Perylene pigments: C.I. Pigment Red 123, 149, 178, 179 and 224; C.I. Pigment Violet 29; C.I. Pigment Black 31 and 32;
- Phthalocyanine pigments: C.I. Pigment Blue 15, 15:1, 15:2, 15:3, 15:4, 15:6, 16; C.I. Pigment Green 7, 36;
- Pyranthrone pigments: C.I. Pigment Orange 51; C.I. Pigment Red 216;
- Pyrazoloquinazolone pigments: C.I. Pigment Orange 67 and C.I. Pigment Red 216;
- Thioindigo pigments: C.I. Pigment Red 88 and 181; C.I. Pigment Violet 38;
- Triarylcarbonium pigments: C.I. Pigment Red 81, 81:1 and 169; C.I. Pigment Violet 1, 2, 3 and 27; C.I. Pigment Blue 1, 61 and 62; C.I. Pigment Green 1;
- C.I. Pigment Black 1 (Aniline black);
- C.I. Pigment Yellow 101 (Aldazine yellow);
- C.I. Pigment Brown 22.

Suitable inorganic color pigments are, for example:
- White pigments: titanium dioxide (C.I. Pigment White 6), zinc white, pigment grade zinc oxide; zinc sulfide, lithopone;
- Black pigments: iron oxide black (C.I. Pigment Black 11), iron manganese black, spinel black (C.I. Pigment Black 27); carbon black (C.I. Pigment Black 7); graphite, (C.I. Pigment Black 10); chromium iron oxide black (C.I. Pigment Brown 29);
- Chromatic pigments: chromium oxide, chromium oxide hydrate green; chrome green (C.I. Pigment Green 48); cobalt green (C.I. Pigment Green 50); ultramarine green; cobalt blue (C.I. Pigment Blue 28 and 36; C.I. Pigment Blue 72); ultramarine blue; manganese blue; ultramarine violet; cobalt violet, manganese violet; iron oxide red (C.I. Pigment Red 101); cadmium sulfoselenide (C.I. Pigment Red 108); cerium sulfide (C.I. Pigment Red 265); molybdate red (C.I. Pigment Red 104); ultramarine red; iron oxide brown (C.I. Pigment Brown 6 und 7), mixed brown, spinel and corundum phases (C.I. Pigment Brown 29, 31, 33, 34, 35, 37, 39 and 40), chromium titanium yellow (C.I. Pigment Brown 24), chrome orange; cerium sulfide (C.I. Pigment Orange 75); iron oxide yellow (C.I. Pigment Yellow 42); nickel titanium yellow (C.I. Pigment Yellow 53; C.I. Pigment Yellow 157, 158, 159, 160, 161, 162, 163, 164 and 189); spinel phases (C.I. Pigment Yellow 119); cadmium sulfide and cadmium zinc sulfide (C.I. Pigment Yellow 37 and 35); chrome yellow (C.I. Pigment Yellow 34); bismuth vanadate (C.I. Pigment Yellow 184).

The effect pigments are platelet-shaped pigments having a monophasic or polyphasic construction, the color play of which is marked by the interplay of interference, reflection and absorption phenomena. Examples are platelets of aluminum, aluminum oxide, iron oxide, mica and glass having one or more coating layers, especially layers of metal oxides.

Examples of suitable fillers are transparent silicon dioxide, ground quartz, aluminum oxide, aluminum hydroxide, natural and synthetic mica, talc, kaolin, barium sulfate, and calcium carbonates like naturally occurring chalk or precipitated calcium carbonate.

The amount of pigment component (A) is of from 1 to 80 wt%, based on the total weight of the aqueous pigment preparation, preferably 5 to 70 wt%.

In case of a combination of a pigment and a filler, the weight ratio of pigment to filler may be in the range of from 1:20 to 20:1.

The instant pigment preparations contain as component (B) at least one water-soluble additive containing at least one polyamine B, which is selected from the group consisting of poly-C₂-C₃-alkyleneimines, modified poly-C₂-C₃-alkyleneimines, modified melamines and mixtures thereof.

The component (B) is described in EP patent application EP16152442.6 which disclosure is herein incorporated by reference.

The components (B) are usually present in an anionic form in the aqueous pigment preparation, which have generally a pH value of from about 6 to 10. Depending on the pH value of the application medium the component (B) may be present in cationic / protonated form.

The polyamine B is characterized by having a plurality of basic nitrogen atoms per molecule. The nitrogen atoms may be present in the form of primary, secondary or tertiary amine groups and/or in the form of imino-nitrogens, which are ring members of a heteroaromatic triazine ring, in case of the melamine derivatives.

Generally, the polyamine B has an amine number of from 10 to 1500 mg KOH/g. The amine number will depend from the type of polyamine B and plays only a minor role.

Frequently, the polyamine B has a number average weight in the range from 200 to 50,000 Dalton, in particular in the range from 500 to 20,000 Dalton.

Preferably, the polyamine B bears one poly-(C₂-C₄-alkyleneether) group, in particular selected from polyethyleneoxide groups, poly(ethyleneoxide-co-propyleneoxide) groups and polypropyleneoxide groups, where the poly-(C₂-C₄-alkyleneether) group may be non-capped, i.e., terminated with a OH group, or capped, e.g., by a C₁-C₂₀-alkyl group (hereinafter termed C₁-C₂₀-alkyl terminated poly-(C₂-C₄-alkyleneether) group). The poly-(C₂-C₄-alkyleneether) groups may have on a number average from 3 to 80, in particular from 5 to 50 C₂-C₄-alkyleneoxide repeating units, i.e., the number average weight of the poly-(C₂-C₄-alkyleneether) group may be in the range from 150 to 5,000 Dalton, in particular from 200 to 2,500 Dalton. If present, the relative amount of poly-(C₂-C₄-alkyleneether) groups to the total weight of the polyamine B is generally at least 10 wt%, in particular at least 30 wt%, especially at least 50 wt% and may be as high as 99 wt% or 98 wt%.

According to the invention the polyamine B is selected from the groups i. to iii., in particular from groups i., ii. and iii and from mixtures thereof:
i. poly-C₂-C₃-alkyleneimines, e.g., linear or branched polyethylene imines, in particular polyethylene imines having a number average molecular weight of from 250 to 50,000 Dalton;
ii. modified poly-C₂-C₃-alkyleneimines, such as
   a. poly-(C₂-C₄-alkyleneether) modified poly-C₂-C₃-alkyleneimines, i.e., poly-C₂-C₃-alkyleneimines, in particular polyethyleneimines, as described before under item i., wherein at least a portion, e.g., from 30 to 100 mol%, especially from 80 to 100 mol%, of the hydrogen atoms of the primary and secondary amino groups of the poly-C₂-C₃-alkyleneimine are replaced by poly-(C₂-C₄-alkyleneether) radicals, e.g., by reacting the poly-C₂-C₃-alkyleneimine with an C₂-C₄-alkyleneoxide or a mixture of alkyleneoxides, such as ethyleneoxide, propyleneoxide, 1,2-butyleneoxide, 2,3-butyleneoxide or 2-methyl-1,2-propyleneoxide. In the poly-(C₂-C₄-alkyleneether) modified poly-C₂-C₃-alkyleneimines the poly-(C₂-C₄-alkyleneether) groups are in particular OH terminated polyethyleneoxide groups or OH terminated poly(ethyleneoxide-co-propyleneoxide) groups. In the poly-(C₂-C₄-alkyleneether) modified poly-C₂-C₃-alkyleneimines the poly-(C₂-C₄-alkyleneether) groups will frequently have on a number average from 3 to 80, in particular from 5 to 50 C₂-C₄-alkyleneoxide repeating units, per nitrogen atom. In the poly-(C₂-C₄-alkyleneether) modified poly-C₂-C₃-alkyleneimines the amount of poly-(C₂-C₄-alkyleneether) groups is generally at least 30 wt%, e.g., from 50 to 99 wt%, especially from 70 to 98 wt%, based on the total weight of the poly-(C₂-C₄-alkyleneether) modified poly-C₂-C₃-alkyleneimine;
   b. poly-C₂-C₃-alkyleneimines, in particular polyethyleneimines, as described before under item i., wherein at least a portion, e.g., from 30 to 100 mol%, especially from 80 to 100 mol%, of the hydrogen atoms of the primary and secondary amino groups of the poly-C₂-C₃-alkyleneimine are replaced by C₂-C₂₀-acyl radicals, e.g., by reacting the poly-C₂-C₃-alkyleneimine with a C₂-C₂₀-alkanoic acid or an amide forming derivative thereof;
   c. poly-(C₂-C₄-alkyleneether) modified poly-C₂-C₃-alkyleneimines as described herein under item ii.a, wherein some, e.g., from 10 to 50%, of the terminal hydroxyl groups of the poly-(C₂-C₄-alkyleneether) moieties are modified by acyl or carbamate groups, in particular by, e.g., by C₁-C₂₀-alkylcarbonyl or N-C₁-C₂₀-alkylcarbamate groups. These modified poly-(C₂-C₄-alkyleneether) modified poly-C₂-C₃-alkyleneimines can be obtained by reacting a poly-(C₂-C₄-alkyleneether) modified poly-C₂-C₃-alkyleneimine with a C₂-C₂₀-alkanoic acid or an ester forming derivative thereof or by reacting a poly-(C₂-C₄-alkyleneether) modified poly-C₂-C₃-alkyleneimine with a C₁-C₂₀-alkyl isocyanate. In these modified poly-(C₂-C₄-alkyleneether) modified poly-C₂-C₃-alkyleneimines the amount of poly-(C₂-C₄-alkyleneether) groups is generally at least 20 wt%, e.g., from 40 to 98 wt%, especially from 60 to 95 wt%, based on the total weight of the poly-(C₂-C₄-alkyleneether) modified poly-C₂-C₃-alkyleneimine. In these modified poly-(C₂-C₄-alkyleneether) modified poly-C₂-C₃-alkyleneimines the amount of acyl or carbamate groups will be of from 1 to 30 wt%, in particular from 2 to 20 wt%, based on the total weight of the poly-(C2-C4-alkyleneether) modified poly-C₂-C₃-alkyleneimine;
iii. poly-(C₂-C₄-alkyleneether) modified melamines, are melamine compounds, which bear on an average at least 0.5 poly-(C₂-C₄-alkyleneether) groups, in particular at least one poly-(C₂-C₄-alkyleneether) group per melamine ring, e.g., from 0.5 to 6, in particular from 1 to 4 poly-(C₂-C₄-alkyleneether) groups per melamine ring. The poly-(C₂-C₄-alkyleneether) modified melamines may have one melamine ring or they may be oligomers having more than one melamine ring, e.g., on average 1.1 to 10 melamine rings, per molecule. The poly-(C₂-C₄-alkyleneether) groups of the poly-(C₂-C₄-alkyleneether) modified melamines are usually bound to the amino groups of the melamine ring via a bivalent linker, e.g., a moiety CRR', where R and R' are hydrogen or C₁-C₁₀-alkyl, or CRR' is a C=O group. In the poly-(C₂-C₄-alkyleneether) modified melamines the poly-(C₂-C₄-alkyleneether) groups are in particular C₁-C₂₀-alkyl terminated poly-(C₂-C₄-alkyleneoxide) groups, more particularly C₁-C₂₀-alkyl terminated polyethyleneoxide or C₁-C₂₀-alkyl terminated poly(ethyleneoxide-co-propyleneoxide) groups, especially methyl terminated polyethyleneoxide groups. In the poly-(C₂-C₄-alkyleneether) modified melamines the poly-(C₂-C₄-alkyleneether) groups will frequently have a number average weight in the range from 150 to 5,000 Dalton, in particular from 200 to 2,500 Dalton. In the poly-(C₂-C₄-alkyleneether) modified melamines the amount of poly-(C₂-C₄-alkyleneether) groups is generally at least 10 wt%, e.g., from 30 to 95 wt%, especially from 50 to 90 wt%, based on the total weight of the poly-(C₂-C₄-alkyleneether) modified melamine. In addition to the poly-(C₂-C₄-alkyleneether) groups the poly-(C₂-C₄-alkyleneether) modified melamines may carry one or more C₆-C₂₂-alkoxy and/ or C₆-C₂₂-alkenyloxy groups, which are bound to the amino groups of the melamine ring via a bivalent linker, e.g., a moiety CRR', where R and R' are hydrogen or C₁-C₁₀-alkyl, or CRR' is a C=O group.

More particularly, the polyamine B is selected from the group consisting of the polyamines of group i., ii.a, ii.c and iii, most preferably from the group consisting of the polyamines of group i., ii.a and ii.c.

In a first particular group of embodiments the polyamine B is selected from polyethyleneimines, in particular from branched polyethyleneimines, in particular from polyethyleneimines having a number average molecular weight in the range from 500 to 50,000, in particular from 1,000 to 20,000.

In a second particular group of embodiments the polyamine B is selected from poly-(C₂-C₄-alkyleneether) modified polyethyleneimines, in particular from poly-(C₂-C₄-alkyleneether) modified branched polyethyleneimines, in particular from poly-(C₂-C₄-alkyleneether) modified polyethyleneimines based on polyethyleneimines having a number average molecular weight in the range from 250 to 15,000, in particular from 500 to10,000. In the poly-(C₂-C₄-alkyleneether) modified polyethyleneimines the poly-(C₂-C₄-alkyleneether) groups are in particular OH terminated polyethyleneoxide groups or OH terminated poly(ethyleneoxide-co-propyleneoxide) groups. In the poly-(C₂-C₄-alkyleneether) modified polyethyleneimines the poly-(C₂-C₄-alkyleneether) groups will frequently have on a number average from 3 to 80, in particular from 5 to 50 C₂-C₄-alkyleneoxide repeating units, per nitrogen atom. In the poly-(C₂-C₄-alkyleneether) modified polyethyleneimines the amount of poly-(C₂-C₄-alkyleneether) groups is generally at least 30 wt%, e.g., from 50 to 99 wt%, especially from 70 to 98 wt%, based on the total weight of the poly-(C₂-C₄-alkyleneether) modified polyethyleneimine. The number average weight of the poly-(C₂-C₄-alkyleneether) modified polyethyleneimine will frequently be in the range from 1,000 to 50,000 Dalton, in particular from 2,000 to 20,000 Dalton.

Such poly-(C₂-C₄-alkyleneether) modified polyethyleneimines can be prepared e.g., by reacting the polyethyleneimine with an C₂-C₄-alkyleneoxide or a mixture of alkyleneoxides, such as ethyleneoxide, propyleneoxide, 1,2-butyleneoxide, 2,3-butyleneoxide or 2-methyl-1,2-propyleneoxide. Suitable methods for preparation of poly-(C₂-C₄-alkyleneether) modified polyethyleneimines are described, e.g., in WO-A-2006/108856 and WO-A-2009/060059 and the prior art cited therein.

In a third particular group of embodiments the polyamine B is selected from poly-(C₂-C₄-alkyleneether) modified polyethyleneimines, in particular from poly-(C₂-C₄-alkyleneether) modified branched polyethyleneimines, in particular from poly-(C₂-C₄-alkyleneether) modified polyethyleneimines based on polyethyleneimines having a number average molecular weight in the range from 250 to 10,000, in particular from 500 to 5,000, wherein some, e.g., from 10 to 50%, of the terminal hydroxyl groups of the poly-(C₂-C₄-alkyleneether) moieties are modified by acyl or carbamate groups, in particular by, e.g., by C₁-C₂₀-alkylcarbonyl or N-C₁-C₂₀-alkylcarbamate groups. These modified poly-(C₂-C₄-alkyleneether) modified polyethyleneimines can be obtained by reacting a poly-(C₂-C₄-alkyleneether) modified polyethyleneimine with a C₂-C₂₀-alkanoic acid or an ester forming derivative thereof or by reacting a poly-(C₂-C₄-alkyleneether) modified polyethyleneimine with a C₁-C₂₀-alkyl isocyanate. In these modified poly-(C₂-C₄-alkyleneether) modified polyethyleneimines the amount of poly-(C₂-C₄-alkyleneether) groups is generally at least 20 wt%, e.g., from 40 to 98 wt%, especially from 60 to 95 wt%, based on the total weight of the poly-(C₂-C₄-alkyleneether) modified polyethyleneimine. In these modified poly-(C₂-C₄-alkyleneether) modified polyethyleneimines the amount of acyl or carbamate groups will be in the range from 1 to 30 wt%, in particular from 2 to 20 wt%, based on the total weight of the poly-(C₂-C₄-alkyleneether) modified polyethyleneimine. The number average weight of the modified poly-(C₂-C₄-alkyleneether) modified polyethyleneimine will frequently be in the range from 2,000 to 20,000 Dalton.

In a fourth particular group of embodiments the polyamine B is selected from poly-(C₂-C₄-alkyleneether) modified melamines, i.e., melamine compounds, which bear on an average at least 0.5 poly-(C₂-C₄-alkyleneether) groups, in particular at least one poly-(C₂-C₄-alkyleneether) group per melamine ring, e.g., from 0.5 to 6, in particular from 1 to 4 poly-(C₂-C₄-alkyleneether) groups per melamine ring. The melamine compounds may have one melamine ring or they may be oligomers having more than one melamine ring, e.g., on a number average 1.1 to 10, in particular 1.2 to 5 melamine rings, per molecule. The poly-(C₂-C₄-alkyleneether) groups of the poly-(C₂-C₄-alkyleneether) modified melamines are usually bound to the amino groups of the melamine ring via a bivalent linker, e.g., a moiety CRR', where R and R' are hydrogen or C₁-C₁₀-alkyl, or CRR' is a C=O group. In the poly-(C₂-C₄-alkyleneether) modified melamines the poly-(C₂-C₄-alkyleneether) groups are in particular C₁-C₂₀-alkyl terminated poly-(C₂-C₄-alkyleneoxide) groups, more particularly C₁-C₂₀-alkyl terminated polyethyleneoxide or C₁-C₂₀-alkyl terminated poly(ethyleneoxide-co-propyleneoxide) groups, especially methyl terminated polyethyleneoxide groups. In the poly-(C₂-C₄-alkyleneether) modified melamines the poly-(C₂-C₄-alkyleneether) groups will frequently have a number average weight in the range from 150 to 5,000 Dalton, in particular from 200 to 2,500 Dalton. In the poly-(C₂-C₄-alkyleneether) modified melamines the amount of poly-(C₂-C₄-alkyleneether) groups is generally at least 10 wt%, e.g., from 30 to 95 wt%, especially from 50 to 90 wt%, based on the total weight of the poly-(C₂-C₄-alkyleneether) modified melamine. In addition to the poly-(C₂-C₄-alkyleneether) groups the poly-(C₂-C₄-alkyleneether) modified melamines may carry one or more C₆-C₂₂-alkoxy and/or C₆-C₂₂-alkenyloxy groups, which are bound to the amino groups of the melamine ring via a bivalent linker, e.g., a moiety CRR', where R and R' are hydrogen or C₁-C₁₀-alkyl, or CRR' is a C=O group.

Such poly-(C₂-C₄-alkyleneether) modified melamines can be prepared, e.g., by reacting melamine compound having aminal, semiaminal or an O-alkyl carbamate group with a C₁-C₂₀-alkyl terminated poly-(C2-C4-alkyleneoxide), more particularly with a C₁-C₂₀-alkyl terminated polyethyleneoxide or C₁-C₂₀-alkyl terminated poly(ethyleneoxide-co-propyleneoxide), especially with a methyl terminated polyethyleneoxide. The amount of C₁-C₂₀-alkyl terminated poly-(C₂-C₄-alkyleneoxide) groups will frequently be from 0.5 to 6 mol, in particular from 1 to 4 mol per mol of melamine rings. A part, e.g., from 10 to 50 mol% of the C₁-C₂₀-alkyl terminated poly-(C₂-C₄-alkyleneoxide) can be replaced by long chain mono-alcohols, e.g., by C₆-C₂₂-alkanols or C₆-C₂₂-alkenols, such as stearyl alcohol or oleyl alcohol.

Suitable melamine compounds as starting materials for preparing poly-(C₂-C₄-alkyleneether) modified melamines include, e.g., melamine precondensates, i.e., reaction product of melamine with an aldehyde, e.g., benzaldehyde or a C₁-C₁₀-alkanal, such as formaldehyde, acetaldehyde, propionaldehyde or butyraldehyde, which is preferably partially or completely etherified with, e.g., with methanol. Generally, the melamine precondensates are oligomers which have more than one melamine ring, e.g., on an average (number average) 1.1 to 10, in particular 1.2 to 5 melamine rings, per molecule. In the melamine precondensates the ratio of chemically bound aldehyde to melamine is in the range from 2 to 6. Preferably, the degree of the etherification is from 20 to 100 mol% per mol aldehyde. These precondensates are known, e.g., from Kirk-Othmer, Encyclopedia of Chemical Technology, 3rd ed., vol. 2, pp. 440-469, US 4,918,317, EP 26914, EP 218887, EP 319337, EP 383,337, EP 415273, DE 19833347, DE 19835114 and WO 01/51197. Suitable pre-condensates are commercially available, e.g., Cymel types, such as Cymel® 303, 327, 328 or 385 (etherified melamine formaldehyde resins of Cytec), Maprenal® types, such as Maprenal® MF 900w/95, MF 915/75IB, MF 920/75WA, MF 921w/85WA, (etherified melamine formaldehyde resins of Ineos), Kauramin® types of BASF, such as Kauramin® 783, Kauramin® 792 or Kauramin® 753 (melamine formaldehyde resins), Luracoll® types of BASF, such as Luracoll® SD (etherified melamine formaldehyde resins) and Luwipal® types of BASF, such as Luwipal® 063, Luwipal® 069 (etherified melamine formaldehyde resins). Suitable melamine compounds as starting materials for preparing poly-(C₂-C₄-alkyleneether) modified melamines also include carbamates of melamine, i.e., compounds of the formula: 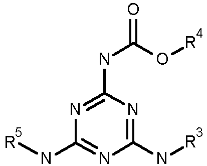 where R⁴ is C₁-C₁₀-alkyl and R⁵ and R³ are, independently of each other, hydrogen or a group C(=O)-O-R⁴.

The C₁-C₂₀-alkyl terminated poly-(C₂-C₄-alkyleneoxide) which is reacted with the melamine compound having aminal, semiaminal or an O-alkyl carbamate group may have a number average weight of from 150 to 5,000 Dalton, in particular from 200 to 2,500 Dalton. The amount of the C₁-C₂₀-alkyl terminated poly-(C₂-C₄-alkyleneoxide) is generally chosen that it is from 0.5 to 6 mol, in particular from 1 to 4 mol per mol of melamine rings. In particular, the weight ratio of the C₁-C₂₀-alkyl terminated poly-(C₂-C₄-alkyleneoxide) to the melamine compound is of from 1:3 to 20:1, especially from 1:1 to 10:1.

The reaction of the C₁-C₂₀-alkyl terminated poly-(C₂-C₄-alkyleneoxide) and optionally the long chain mono-alcohol with the melamine compound having aminal, semiaminal or an O-alkyl carbamate group is usually performed in the presence of a Broenstedt acid catalyst. The amount of catalyst may be of from 0.05 to 2 wt%, in particular from 0.1 to 1 wt%, based on the total weight of C₁-C₂₀-alkyl terminated poly-(C₂-C₄-alkyleneoxide) and melamine compound. Suitable Broenstedt catalysts include organic sulfonic acids, e.g., alkylsulfonic acids such as methyl or ethylsulfonic acid and arylsulfonic acid such as phenylsulfonic acid or toluenesulfonic acid. The reaction may be performed at temperatures of from 80 to 180°C, in particular from 90 to 160°C.

Poly-(C₂-C₄-alkyleneether) modified melamines can also be prepared e.g., by reacting melamine with an aldehyde, e.g., benzaldehyde or a C₁-C₁₀-alkanal, such as formaldehyde, acetaldehyde, propionaldehyde or butyraldehyde, and a C₁-C₂₀-alkyl terminated poly-(C₂-C₄-alkyleneoxide), optionally in combination with long chain mono-alcohol, thereby obtaining melamine precondensate modified with one or more poly-(C₂-C₄-alkyleneether) groups per melamine ring. The molar ratio of melamine to aldehyde is generally in the range of 1:1.5 to 1:10, in particular 1:3 to 1:8, 1:4 to 1:6. The molar ratio of poly-(C₂-C₄-alkyleneether) to melamine is generally from 0.5 to 6 mol, in particular from 1 to 4 mol per mol of melamine. In particular, the weight ratio of the C₁-C₂₀-alkyl terminated poly-(C₂-C₄-alkyleneoxide) to the melamine is in the range from 1:1 to 40:1, especially from 2:1 to 20:1. The reaction may be performed in the presence of a Broenstedt acid catalyst. The amount of catalyst may be of from 0.05 to 2 wt%, in particular from 0.1 to 1 wt%, based on the total weight of C₁-C₂₀-alkyl terminated poly-(C₂-C₄-alkyleneoxide) and melamine compound. Suitable Broenstedt catalysts include organic sulfonic acids, e.g., alkylsulfonic acids such as methyl or ethylsulfonic acid and arylsulfonic acid such as phenylsulfonic acid or toluenesulfonic acid. The reaction may be performed at temperatures of from 80 to 180°C, in particular from 90 to 160°C.

The amount of polyamine forming component (B) is preferably 1 to 8 wt%, based on the total weight of the aqueous pigment preparation.

Component (C) of the instant pigment preparation is formed by additives based on a lecithin and/or an anionic additive based on a phosphoric ester and/or phosphonic ester. Preferably, the phosphoric or phosphonic ester of polyalkylene oxides or of reaction products of alkylene oxides or aryl substituted alkylene oxides, for example, phenyl substituted ethylene oxide, with aliphatic alcohols, phenol or naphthol, which may each be substituted, with aliphatic or aromatic amines, or with aliphatic carboxylic acids or carboxamides may be used. Further, the salts of said esters may be used. Additives of these kinds are described for example in WO-A-2004/00903.

By reaction with phosphoric acid, phosphorus pentoxide or phosphonic acid, the alkoxylation products/polyether alcohol derivatives can be converted into the phosphoric monoesters and diesters or phosphonic esters, respectively. The anionic esters are preferably in the form of water-soluble salts, more particularly alkali metal salts, especially sodium salts, potassium salts, ammonium salts or organic ammonium salts. They may, however, also be used in the form of the free acids.

The polyether alcohol derivatives may be prepared by polyaddition of alkylene oxides with starter molecules, such as aliphatic or aromatic alcohols. It is usual to use 1 to 300 mol, preferably 3 to 150 mol, more particularly 3 to 50 mol of alkylene oxide per mole of starter molecule. The alcohols are reacted by known methods, with acidic or alkaline catalysis, for example.

Suitable aliphatic alcohols contain generally 6 to 26 C atoms, preferably 8 to 18 C atoms, and may be straight-chain or branched in construction, and may also be unsaturated.

Examples of saturated alcohols are hexyl alcohol, heptyl alcohol, octyl alcohol (caprylyl alcohol), nonyl alcohol, decyl alcohol, isodecyl alcohol, undecyl alcohol, dodecyl alcohol (lauryl alcohol), 2-butyloctyl alcohol, tridecyl alcohol, isotridecyl alcohol, tetradecyl alcohol (myristyl alcohol), pentadecyl alcohol, hexadecyl alcohol (cetyl alcohol), 2-hexyldecyl alcohol, heptadecyl alcohol, octadecyl alcohol (stearyl alcohol), nonadecyl alcohol, eicosyl alcohol, docosyl alcohol, hydrated tallow alcohol, and combinations thereof.

Particularly suitable are alcohols of natural origin, such as capryl alcohol, decyl alcohol, lauryl alcohol, myristyl alcohol, cetyl alcohol, stearyl alcohol, eicosyl alcohol, oleyl alcohol, linoleyl alcohol, linolenoyl alcohol, ricinol alcohol, and combinations thereof.

Also particularly suitable are the saturated or unsaturated fatty alcohols obtained by lipolysis and reduction from natural raw materials, examples being fatty alcohols from coconut oil or palm kernel oil, as for example cocoyl alcohol or palm kernel oil alcohol.

Also particularly suitable are the synthetic alcohols from the oxo process (also referred to as "oxo-process alcohols" or "oxo alcohols"). Oxo alcohols are linear and have no more than one branching point, examples being iso-C₁₃-oxo alcohols and C₁₃-C₁₅-oxo alcohols.

Suitable aromatic alcohols are phenol, 1-naphthol, and 2-naphthol, which may be substituted by C₁-C₁₂-alkyl, preferably C₁-C₄-alkyl or C₄-C₁₂-alkyl, or by styryl, which may be substituted by methyl.

The polyether alcohol derivatives comprise unmixed polyalkylene oxides, preferably C₂-C₄-alkylene oxides and phenyl-substituted C₂-C₄-alkylene oxides, more particularly polyethylene oxide (PO), polypropylene oxide, and poly(phenylethylene oxide), block copolymers such as ethylene oxide/propylene oxide block copolymers and ethylene oxide/phenylethylene oxide block copolymers, or random copolymers of these alkylene oxides.

Suitable phosphoric and phosphonic esters are derived in particular from alkoxylated fatty alcohols, oxo alcohols or substituted phenols, preferably from ethoxylated fatty alcohols, oxo alcohols or substituted phenols.

Preferred are phosphoric esters of alkoxylated fatty alcohols, oxo alcohols or phenols, such as phosphoric esters of formula

[R¹O-(A-O)_{y}]ₓ-PO(OH)₃₋ₓ (I),

wherein
R¹ is independently from one another linear or branched C₈-C₂₂-alkyl, C₈-C₂₂-alkenyl or phenyl, said alkyl, alkenyl or phenyl may be substituted one or more times with C₁-C₁₂-alkyl; styryl or methyl-substituted styryl,
A is selected from the group consisting of ethan-1,2-diyl and propan-1,2-diyl and combinations thereof,
x = 1 or 2; and
y is an integer having a number average of 1 to 100.

The group (A-O)_{y} is preferably formed of -(CH₂-CH₂O)- and/or -(CH₂-CH(CH₃)O)-. In case of mixed (A-O) units, i.e., -(CH₂-CH₂O)ₘ-(CH₂-CH(CH₃)O)ₙ-, when m ≥ 1 and n ≥ 1, especially m ≥ 3 and n ≥ 3, these may be of random or blockwise construction.

The group (A-O)_{y} is preferably -(CH₂-CH₂O)ₘ-(CH₂-CH(CH₃)O)ₙ-, wherein
m = 0-50; and n = 0-50;
with the proviso that m+n is at least 1, especially at least 3.

The group (A-O)_{y} is more preferably -(CH₂-CH₂O)ₘ-(CH₂-CH(CH₃)O)ₙ, wherein
m = 3-20; and n = 3-20;
with the proviso that m+n is at least 3.

Especially preferred are phosphoric esters of formula

[R¹O-(CH₂-CH₂O)ₘ]ₓ-PO(OH)₃₋ₓ (I'),

wherein m = 3-20; and x = 1 or 2.

Further preferred are phosphoric esters of formula (I), wherein the group (A-O)_{y} is a polyethylene oxide with 3 to 20 units, especially, 5 to 20 units.

Further preferred are phosphoric esters of formula (I), wherein the group (A-O)_{y} comprises an ethylene oxide/propylene oxide block copolymer having in each case at least one ethylene oxide block of 3 to 20 units and at least one propylene oxide block of 3 to 20 units.

Further preferred are phosphoric esters of formula (I), wherein the group (A-O)_{y} is a random copolymer of 3 to 20 ethylene oxide units and of 3 to 20 propylene oxide units.

Especially preferred are phosphoric esters of formula

[R¹O-(A-O)_{y}]ₓ-PO(OH)₃₋ₓ (I),

wherein
R¹ is independently from one another C₈-C₂₂-alkyl, C₈-C₂₂-alkenyl, distyryl phenyl, tristyryl phenyl, dibutyl phenyl or tributyl phenyl.

Anionic surface-active additives of these kinds are known and commercially available, for example, under the trade names Crodafos® (Croda), Rhodafac® (Rhodia), Maphos® (BASF), Dispex® (BASF), Empicol® (Albright & Wilson), Matexil® (ICI), Soprophor® (Rhodia), Lutensit® (BASF), Strodex® (Dexter), and Hostphat® (Clariant).

Accordingly, in a preferred embodiment, the instant invention relates to a pigment preparation, wherein the component (C) is a phosphoric ester of formula

[R¹O-(A-O)_{y}]ₓ-PO(OH)₃₋ₓ (I),

wherein
R¹ is independently from one another linear or branched C₈-C₂₂-alkyl, C₈-C₂₂-alkenyl or phenyl, said phenyl may be substituted by one or more times with C₁-C₁₂-alkyl; styryl or methyl-substituted styryl,
A is selected from the group consisting of ethan-1,2-diyl, propan-1,2-diyl and combinations thereof,
x = 1 or 2, preferably 1; and
y is an integer having a number average of 1 to 100.

A pigment preparation is more preferred, wherein the component (C) is a phosphoric ester of formula

[R¹O-(A-O)_{y}]ₓ-PO(OH)₃₋ₓ (I),

wherein
R¹ is independently from one another C₈-C₂₂-alkyl, C₈-C₂₂-alkenyl, distyryl phenyl, tristyryl phenyl, dibutyl phenyl or tributyl phenyl,
A is selected from the group consisting of ethan-1,2-diyl, propan-1,2-diyl and combinations thereof,
x = 1 or 2, preferably 1; and
y is an integer having a number average of 3 to 50.

Preferably, if polyamine B is selected from the group consisting of melamines and modified melamines, component (C) does not consist of an anionic additive based on a phosphoric ester and/or phosphonic ester.

Moreover, lecithins (additives based on a lecithin) are preferably a constituent part of component (C). Lecithins are phospholipids, which are composed of fatty acids, glycerol, phosphoric acid and choline. The fatty acids may be saturated or unsaturated. The lecithins are generally present in amphoteric form. Especially preferred, component (C) contains lecithin or soy lecithin.

Accordingly, a pigment preparation is preferred, wherein component (C) contains lecithins.

The component (C) may also be a combination of a lecithin and an anionic phosphoric ester and/or phosphonic ester, especially a combination of a lecithin and a phosphoric ester of formula (I). This combination of (C) may be used together with (B) a polyamine B selected from modified melamines.

Preferably, the amount of component (C) is of from 0.5 to 8 wt%, based on the total weight of the aqueous pigment preparation.

The optional component (D) is formed of various additives, which are conventionally used in aqueous pigment preparations for paints, varnishes and renders. Examples of said additives may be humectants, rheology additives like thickeners, further dispersants differing from (B) and (C), like nonionic additives based on polyethers, wetting agents, defoamers, foam suppressants, preservatives like biocides or fungizides, anti-flocculants, buffer substances, pH regulators and pigment synergists. Additions of this kind are known for aqueous pigment preparations to the skilled person.

In a preferred embodiment the invention relates to a pigment preparation, wherein the component (D) contains 0.1 to 20 wt% of further additives customary for producing an aqueous pigment preparation. Said additives may be selected from humectants, rheology additives, dispersants differing from components (B) and (C), wetting agents, defoamers, foam suppressants, preservatives like biocides or fungizides, anti-flocculants, buffer substances, pH regulators or pigment synergists.

Suitable humectants (component D1) are, for example, water-soluble polyethylene glycols, polyglycerols, glycerol alkoxylates, and alkoxylation products prepared by addition reaction of ethylene oxide(s) and/or propylene oxide(s) with polyhydric alcohols.

Suitable water soluble polyethylene glycols are those having a molecular weight of about 300, 400, 600 Dalton or the like or polypropylene glycols having molecular weights of about 300, 400, 600 Dalton or the like.

Examples of polyglycerol(s) are di-, tri- and tetraglycerole or combinations thereof.

Glycerol alkoxylates may be glycerol ethoxylates having a molecular weight of about 200 to about 1,000 Dalton.

Alkoxylation products prepared by addition of ethylene oxide(s) and/or polypropylene oxide(s) onto polyhydric alcohols may be, for example, trimethylol alkoxylates or pentaerythritol alkoxylates having a molecular weight of about 200 to about 1,000 Dalton.

The humectants are added generally in an amount of from 0.01 to 15 wt%, preferably 3 to 12 wt%, based on the total weight of the pigment preparation.

Figures for molecular weight of the polymers are based fundamentally on their number-average molecular weight. Molecular weights are to be determined by GPC against polyethylene glycol as standard.

Dispersants (component D2) are preferably nonionic dispersants based on polyethers, as disclosed, for example, for component (C) in WO-A-2004/046251. The polyethers are preferably polyalkylene oxides or reaction products of alkylene oxides or aryl-substituted alkylene oxides (for example phenyl-substituted ethylene oxide) with alcohols, amines, aliphatic carboxylic acids or aliphatic carboxylic amides. For example, such alkylene adducts may be formed with monofunctional amines and alcohols as well as with at least bifunctional amines and alcohols.

Additives, which may be used as the component (D2), are, for example, commercially available under Tetronic®, Rhodoline® or Lutensol® designation.

Preference is given to using ethylene oxide/propylene oxide block copolymers, fatty alcohol ethoxylates, and fatty alcohol-ethylene oxide/propylene oxide adducts as further dispersants.

The amount of nonionic dispersants (D2) is preferably up to 5 wt%, based on the total weight of the aqueous pigment preparation.

As additional dispersants it is also possible for water-soluble anionic surface-active additives (D4) selected from the group consisting of homo- and copolymers of ethylenically unsaturated monocarboxylic acids and/or ethylenically unsaturated dicarboxylic acids, which may further comprise, in copolymerized form, vinyl monomers containing no acid function, and of the salts of these homo- or copolymers to be included.

Preferred homopolymers are polyacrylic acid and methacrylic acid.

Preferred copolymers include styrene/acrylic acid, acrylic acid/maleic acid, acrylic acid/methacrylic acid, butadiene/acrylic acid, isobutene/maleic acid, diisobutene/maleic acid, styrene/maleic acid and polyethylene glycol-monovinylether/ maleic acid copolymers, each of which may comprise as additional monomer constituents, acrylic esters, maleic esters and/or 1-alkenes such as 1-hexadecene, 1-octadecene or 1-eicosene.

Examples of suitable wetting agents are oligomeric acids (component D3). Oligomeric acids having at least one COOH group are principally known in the form of their salts as surfactants in cleaning compositions, such as household and industrial cleaners, laundry detergent compositions and dishwashing detergent compositions.

Accordingly, a preferred embodiment is a pigment preparation, wherein the component (D) contains an oligomeric acid (D3) having at least one COOH group, which is obtainable by reacting a polyether of formula

R²-(O-A')_{z}OH (II),

where
R² is C₁-C₃₀-alkyl, preferably C₆-C₂₀-alkyl;
A' is selected from the group consisting of ethan-1,2-diyl and propan-1,2-diyl and combinations thereof;
z is an integer having a number average value of 3 to 10;
with an organic polycarboxylic acid comprising 2, 3 or 4 COOH groups and optionally 1 or 2 OH groups or an anhydride thereof. Instead of the polycarboxylic acid, a C₁-C₄-alkylester, especially a methyl ester, may be used.

The number average molecular weight of the oligomeric acid (D3) is frequently in the range from 200 to 2500 Dalton, in particular in the range from 250 to 2000 Dalton, as determined by GPC or MALDI. Such oligomeric acids are described in EP patent application EP16152442.6 which disclosure is herein incorporated by reference.

The oligomeric acid (D3) may be described by the formula

[R²-(O-A')_{z}O-G]ₚ-Q(COOH)_{q} (III),

where R, A' and z are as defined above and
p is usually 1, 2 or 3, preferably 1 or 2;
q is usually 1, 2 or 3, preferably 1 or 2;
G is a chemical bond or, preferably, a carbonyl group; and
Q represents a linker, which is typically a polyvalent hydrocarbon radical, which is optionally substituted by one or more, e.g., 1 or 2 OH groups, where the polyvalent hydrocarbon radical may be interrupted by 1 or 2 COOH groups and where the polyvalent hydrocarbon radical frequently has 2 to 16 carbon atoms, especially 2 to 10 or 2 to 8 carbon atoms.

The number average molecular weight of the polyether (II) is frequently in the range from 200 to 2400 Dalton, in particular in the range from 250 to 1500 Dalton and especially in the range from 350 to 700 Dalton, as determined by GPC or MALDI.

Preferably, the polyether (II) is selected from C₁-C₃₀-alkylpolyethyleneoxides (A' = 1,2-ethandiyl, R² = C₁-C₃₀-alkyl), C₁-C₃₀-alkylpolypropyleneoxides and C₁-C₃₀-alkylpoly(ethylenoxide-co-propyleneoxide)s, in particular C₆-C₂₀-alkylpolyethylene-oxides, C₆-C₂₀-alkylpolypropyleneoxides and C₆-C₂₀-alkylpoly(ethylenoxide-co-propyleneoxide)s. Polyethers of formula (II) are well known and commercially readily available.

The polycarboxylic acid may be described by the formula Q(COOH)_{q+1}, where Q and q are as described above.

The polycarboxylic acid and the anhydrides thereof may be selected from the group consisting of maleic acid, maleic acid anhydride, phthalic acid, phthalic acid anhydride, glutaric acid, glutaric acid anhydride, succinic acid, succinic acid anhydride, 1,2-cyclohexanedicarboxylic acid, 1,2-cyclohexanedicarboxylic acid anhydride, itaconic acid, itaconic acid anhydride, fumaric acid, pyromellitic dianhydride, citric acid, malic acid, tartaric acid, propane-1,2,3-tricarboxylic acid, aconitic acid, isocitric acid, and mixtures thereof. Preferred polycarboxylic acids are succinic acid anhydride, glutaric acid anhydride, itaconic acid anhydride, citric acid, malic acid and maleic anhydride.

Hence, the radical Q is especially selected from the following groups: -CH₂-CH₂-, -CH₂-CH(OH)-, -CH(OH)-CH(OH)-, -CH₂-C(-)(OH)-CH₂-, -CH=CH-; -CH₂-CH[OC(=O)-CH₂-CH(OH)-]- and -CH₂-CH[OC(=O)-R⁶-]-CH₂-, where R⁶ is -CH₂-CH₂-, or -CH=CH-.

The reaction of the polyether of formula (II) with the polycarboxylic acid or the anhydride thereof may be performed in a single step. In this case, the relative molar amounts of polyether of formula (II) and polycarboxylic acid or its anhydride are chosen such that the carboxyl groups are not completely consumed. In particular, the relative amounts of the polyether of formula (II) and the polycarboxylic acid having z+1 carboxyl groups is chosen such that the molar ratio of the polyether of formula (II) to the amount of carboxylic acid is at most 0.8(z+1), in particular in the range of 0.3(z+1) to 0.8(z+1), especially in the range from 0.4(z+1) to 0.7(z+1).

The reaction of the polyether of formula (II) with the polycarboxylic acid or the anhydride thereof may be performed in the presence of an acidic catalyst, preferably a Lewis acid catalyst. The amount of catalyst may be of from 0.01 to 2 wt%, based on the total weight of polyether of formula (II) and polycarboxylic acid or the anhydride thereof. Example of Lewis acid catalysts include tin compound catalysts, such as dibutyltindioctoate and dibutyltindilaurate, and titanium(IV)alkoxides, such as tetrabutyltitanate and tetraisopropyltitanate.

The reaction of the polyether of formula (II) with the polycarboxylic acid or the anhydride thereof may be preferably performed at 70 to 230°C, in particular from 80 to 200°C. The reaction may be performed in an inert solvent, e.g., an aromatic hydrocarbon, or in bulk, the latter being preferred. It may be advantageous to remove water formed in the reaction, if a polycarboxylic acid is used. The reaction time typically depends on the reactivity of the polyether (II), the polycarboxylic acid or its anhydride, the reaction temperature and the type and amount of catalyst used. Usually the reaction will be performed until either the theoretical amount of water has been formed and/or until the desired acid number is achieved, which is in the range of from 20 to 200 mg KOH/g.

The wetting agents, especially the oligomeric acid (D3) are usually added in an amount of from 0.01 to 8 wt%, preferably 0.05 to 7 wt%, based on the total weight of the pigment preparation.

Defoamers may be included in the preparation in small amounts (0.01 to 0.2 wt%, based on the total weight of the pigment preparation, from the companies Tego, Byk, and Borchers, for example). Suitable defoamers are preferably mineral oil defoamers, polyether-modified polysiloxanes, silicones, polysiloxanes, vegetable oils, polymer-based defoamers such as modified fatty acids, polyethers, polyacrylates, silicon oils, or modified amides. Foam suppressants as well, known for example commercially under the Degressal® name, may be included in an amount up to about 5 wt%, based on the total weight of the pigment preparation.

Furthermore, the pigment preparations may contain preservatives like biocides and fungicides in a low amount, for example, one commercially available from Thor or Rohm & Haas. The biocides may be present in an amount of from 0.01 to 0.5 wt%, based on the total weight of the pigment preparation.

Rheological additives may be added in an amount of about 0.01 to 2 wt%, based on the total weight of the pigment preparation. Preference is given to adding thickeners, such as organophyllosilicates, fumed silica, cellulose derivatives like cellulose ethers or carboxymethyl cellulose, hydrated castor oil, or thickeners based on polyurethanes or polyamides.

Pigment synergists may likewise be present in the pigment preparation, examples being compounds which comprise a pigment chromophore wholly or partly in their molecular structure and preferably have acidic or basic groups, as for example those disclosed in WO-A-2010/057864. The structure of the pigment synergist need not be the same as the structure of the pigment employed. Where a pigment synergist is present, the amount may be in the range from 0.01 to 5 wt%, preferably 0.1 to 3 wt%, based on the total weight of the pigment preparation.

The pigment preparations present are preferably substantially free from surface-active agents based on alkylphenol ethoxylates. These surface-active agents are commonly prepared from reaction products of branched nonylphenol or octylphenol with ethylene oxide. The term "substantially free from alkylphenol ethoxylates" means that the amount of alkylphenol ethoxylates is less than about 0.1 wt%, based on the total weight of the pigment preparation. With further preference the pigment preparations are free from alkylphenol ethoxylates.

The pigment preparation of the invention is preferably in the form of a paste. It is further preferred for the pigment composition of the invention to be fluid and pumpable. The present pigment preparation preferably has a viscosity of less than 3000 mPa.s, measured using a cone/plate rheometer (e.g., Rheo Stress RS 600, from Thermo) at a shear rate of 20 sec⁻¹.

The amount of water in the present pigment preparation may be up to 60 wt%, based of the total weight of the aqueous pigment preparation, preferably in the range of from 10 to 50 wt%.

Preferably, the VOC content of the present pigment preparation is less than 1000 ppm.

Also preferred is a pigment preparation, wherein the SVOC level is less than 5000 ppm.

Subject matter of the present invention, furthermore, is a method for producing the present pigment preparation,
where first of all components (A) to (C) and at least part of component (D) are introduced into water, the resulting suspension is subjected to wet comminution, and optionally the remaining amount of component (D) is subsequently added to the suspension.

With preference, in succession, the components (B), (C), and at least part of the additives (D), such as defoamers, nonionic dispersants wetting agents and biocides, are introduced into water and subsequently the pigment component (A) is added.

In the method, component (A) may be used in the form of dry powder or as a presscake. With preference an aftertreated product is used, meaning that the primary particle size of the pigment component has already been set to the value desired for the application. This aftertreatment is advisable especially in the case of organic pigments, since the as-synthesized crude pigment is generally not suitable directly for the application. In the case of inorganic pigments, as with oxide pigments and bismuth vanadate pigments, for example, the primary particle size may also be set during pigment synthesis, and so the pigment suspensions obtained can be used directly in the method of the invention.

Since the aftertreated pigment component (A) frequently undergoes reagglomeration again in the course of drying and/or on the filter assembly, it is subjected to wet comminution, such as to grinding in a stirred ball mill, for example, in aqueous suspension.

The wet comminution should be carried out with at least some of the additive (D) comprised in the completed pigment preparation; it is preferable to add defoamers, fractions of biocides, wetting agents and nonionic dispersants prior to wet comminution. Remaining additives (D) such as biocides, fungicides, pigment synergists, humectants, antiflocculants or rheological additives may also be added only after the grinding.

Thickeners may be added in during wet grinding, and also after the grinding, in order to set the viscosity desired for the pigment preparation.

A further subject of the present invention is the use of the pigment preparation as mentioned above for coloring coating materials, preferably paints, inks, and renders, more preferably in metering systems and tinting apparatus at the point of sale, or in in-plant tinting systems.

The instant pigment preparations are notable for outstanding performance characteristics, in particular for high color strength and easy dispersibility in application media of different kinds. They are suitable especially as universal pigment preparations, meaning that they are compatible with aqueous emulsion paints (also called latex paints), for example even with very alkaline hydrophilic silicate paints and with solventborne paints. The resulting solventborne paints and emulsion paints do not show any color changing in the rubout test, as described in DE-A-2202527.

The VOC level as well as the SVOC level are low and meet the requirements of the various ecolabels.

Furthermore, in the tinting of the emulsion paints and solventborne paints, they exhibit high accuracy in metering, even at very small amounts of 0.1 ml, and also directly after introduction into the metering-system containers, allowing the usual waiting time of around one day to be done away with.
The pigment preparations are stable and do not dry on the inner walls of the containers or in the metering system, such as in open nozzles, for example, thereby ensuring consistent coloristic performance.

### Examples

### Manufacture of the pigment preparations

A suspension of pigment component (A), additives (B), (C) and (D) in water (in the case of pH levels < 7, adjusted to a pH of 7-9 by addition of aqueous sodium hydroxide solution (25 wt% strength solution)) was ground in a ball mill to a d₅₀ of < 1 µm. The pigment preparations contain ingredients as below, based in each case on the total weight of the preparation.

### Ingredients of the exemplary pigment preparations

In the examples, the amount of component (C) is based on each of the components used, in the form of solutions.

### Component A

Irgalite® Yellow L 1254 HD (C.I. Pigment Yellow 74)
Bayferrox® 3920 (C.I. Pigment Yellow 42)
Furnace carbon black (C.I. Pigment Black 7)
Titanium dioxide (C.I. Pigment White 6).
Filler: calcium carbonate

### Component B

B-1: Ethoxylated/propoxylated polyethyleneimine obtained by reacting a polyethyleneimine having molecular weight of 600 g/mol with 10 mol of EO and 7 mol of PO per reactive amine. The synthesis is described in example 3 of WO 2006/108856. The product was obtained as a brownish viscous liquid having an amine value of 56 mg KOH/g.

B-2: Ethoxylated/propoxylated polyethyleneimine obtained by reacting a polyethyleneimine having molecular weight of 600 g/mol with 24 mol of EO and 16 mol of PO per reactive amine. The synthesis is described in example 1c of WO 2006/108856. The product was obtained as a yellow viscous liquid having an amine value of 33 mg KOH/g.

B-3: Propoxylated polyethyleneimine obtained by reacting a polyethyleneimine having molecular weight of 5000 g/mol and 1 mole of PO per amine. The synthesis was performed by analogy to example 1 described in WO 2006/108856, but using PO instead of EO. The amine value of the product was 650 mg KOH/g and the product was obtained as a yellowish highly viscous liquid.

B-4: Synthesis: A 250 ml four necked flask was charged at 22°C with 22 g of melamine formaldehyde resin (6 fold methylated; Mw ∼ 390), 112.7 g (4 eq.) methoxy-polyethylene glycol (Mn 500) and 0.5% by weight (based on reactants) of para-toluene sulfonic acid and rendered inert by flushing with N₂.

The reaction mass was heated with stirring to 110°C for 6 hours, then to 135°C for 2 hours, and methanol was removed from the reactor under slight vacuum (ca. 800 mbar). The reaction was completed once no further methanol was collected in the receptor flask. The melamine based amine was obtained as clear yellow liquid and used as such (amine number 16.0 mg KOH/g; solid content 99.5%).

### Component C

C-1: Phosphoric acid ester based on ethoxylated C₁₂/C₁₄-fatty alcohol (12 EO), potassium salt (12 EO) (25 wt% aqueous solution)
Lecithin

### Component D3

Synthesis: Under a nitrogen atmosphere, polyalkyleneglycol monoalkylether (Component 1), an anhydride (Component 2) and catalyst (dibutyltindilaurate 0.15 wt%, based on the total weight of component 1 and 2)) were placed in a reactor at 22°C on a 100 to 500 g scale. The contents were slowly heated to reaction temperature (100-150°C) for several hours. Then the resulting product was cooled to 50°C and filtered over a 125 µm filter. The acid value and solid contents were determined and summarized in table 1 below:

**Table 1:**

| | Comp.1 (Eq.) | Comp. 2 (Eq.) | Temp. [°C] | Time [h] | AN [mg KOH/g] | SC [wt%]. | Visual appearance |
|---|---|---|---|---|---|---|---|
| D-1 | Cio-oxoalcohol with 7EO (1.0) | Glutaric anhydride (0.9) | 150 | 6 | 87 | 99 | Clear colorless liquid |
| D-2 | C₁₃-C₁₅-oxoalcohol with 7EO (1.0) | Itaconic acid (0.9) | 120 | 4.5 | 62 | 99 | Clear brownish liquid |

| | | | | | | | |
|---|---|---|---|---|---|---|---|
| AN = acid number; SC = solid content | | | | | | | |

### Example 1

| | |
|---|---|
| 40 wt% | Irgalite® Yellow L 1254 HD |
| 10 wt% | B-1 |
| 4 wt% | C-1 |
| 1 wt% | foam suppressant |
| 4 wt% | PEG 400 (humectant) |
| 0.4 wt% | biocide |
| 0.5 wt% | defoamer |
| balance | water |

### Example 2

| | |
|---|---|
| 40 wt% | Irgalite® Yellow L 1254 HD |
| 10 wt% | B-1 |
| 4 wt% | Lecithin |
| 1 wt% | foam suppressant |
| 0.4 wt% | biocide |
| 0.5 wt% | defoamer |
| balance | water |

### Example 3

| | |
|---|---|
| 55 wt% | Bayferrox® 3920 |
| 6 wt% | B-1 |
| 4 wt% | C-1 |
| 1 wt% | foam suppressant |
| 4 wt% | PEG 400 |
| 0.4 wt% | biocide |
| 0.5 wt% | defoamer |
| balance | water |

### Example 4

| | |
|---|---|
| 55 wt% | Bayferrox® 3920 |
| 6 wt% | B-1 |
| 4 wt% | Lecithin |
| 1 wt% | foam suppressant |
| 0.4 wt% | biocide |
| 0.5 wt% | defoamer |
| balance | water |

### Example 5

| | |
|---|---|
| 60 wt% | Titanium dioxide |
| 5 wt% | calcium carbonate |
| 6 wt% | B-1 |
| 4 wt% | C-1 |
| 1 wt% | foam suppressant |
| 4 wt% | PEG 400 |
| 0.4 wt% | biocide |
| 0.5 wt% | defoamer |
| balance | water |

### Example 6

| | |
|---|---|
| 60 wt% | Titanium dioxide |
| 5 wt% | calcium carbonate |
| 6 wt% | B-1 |

| | |
|---|---|
| 4 wt% | Lecithin |
| 1 wt% | foam suppressant |
| 0.4 wt% | biocide |
| 0.5 wt% | defoamer |
| balance | water |

### Example 7

| | |
|---|---|
| 8 wt% | Furnace carbon black |
| 30 wt% | calcium carbonate |
| 5 wt% | B-1 |
| 6 wt% | C-1 |
| 1 wt% | foam suppressant |
| 0.4 wt% | biocide |
| 0.5 wt% | defoamer |
| balance | water |

### Example 8

| | |
|---|---|
| 8 wt% | Furnace carbon black |
| 30 wt% | calcium carbonate |
| 5 wt% | B-1 |
| 6 wt% | lecithin |
| 1 wt% | foam suppressant |
| 5 wt% | PEG 400 |
| 0.4 wt% | biocide |
| 0.5 wt% | defoamer |
| balance | water |

### Examples 1a to 8a

The compositions of examples 1a to 8a correspond to those of examples 1 to 8 apart from the fact that they contain the same amount of B-2 instead of B-1.

### Examples 1b to 8b

The compositions of examples 1b to 8b correspond to those of examples 1 to 8 apart from the fact that they contain the same amount of B-3 instead of B-1.

### Examples 2c, 4c, 6c, 8c

The compositions of examples 2c, 4c, 6c and 8c correspond to those of examples 2, 4, 6 and 8 apart from the fact that they contain the same amount of B-4 instead of B-1.

### Example 9

| | |
|---|---|
| 40 wt% | Irgalite® Yellow L 1254 HD |

| | |
|---|---|
| 4 wt% | B-1 |
| 4 wt% | C-1 |
| 6 wt% | D-1 |
| 1 wt% | foam suppressant |
| 4 wt% | PEG 400 (humectant) |
| 0.4 wt% | biocide |
| 0.5 wt% | defoamer |
| balance | water |

### Example 10

| | |
|---|---|
| 40 wt% | Irgalite® Yellow L 1254 HD |
| 4 wt% | B-1 |
| 4 wt% | Lecithin |
| 6 wt% | D-1 |
| 1 wt% | foam suppressant |
| 0.4 wt% | biocide |
| 0.5 wt% | defoamer |
| balance | water |

### Example 11

| | |
|---|---|
| 55 wt% | Bayferrox® 3920 |
| 2.4 wt% | B-1 |
| 4 wt% | C-1 |
| 3.6 wt% | D-1 |
| 1 wt% | foam suppressant |
| 4 wt% | PEG 400 |
| 0.4 wt% | biocide |
| 0.5 wt% | defoamer |
| balance | water |

### Example 12

| | |
|---|---|
| 55 wt% | Bayferrox® 3920 |
| 2.4 wt% | B-1 |
| 4 wt% | Lecithin |
| 3.6 wt% | D-1 |
| 1 wt% | foam suppressant |
| 0.4 wt% | biocide |
| 0.5 wt% | defoamer |
| balance | water |

### Example 13

| | |
|---|---|
| 60 wt% | Titanium dioxide |
| 5 wt% | calcium carbonate |
| 2.4 wt% | B-1 |
| 4 wt% | C-1 |
| 3.6 wt% | D-1 |
| 1 wt% | foam suppressant |
| 4 wt% | PEG 400 |
| 0.4 wt% | biocide |
| 0.5 wt% | defoamer |
| balance | water |

### Example 14

| | |
|---|---|
| 60 wt% | Titanium dioxide |
| 5 wt% | calcium carbonate |
| 2.4 wt% | B-1 |
| 4 wt% | Lecithin |
| 3.6 wt% | D-1 |
| 1 wt% | foam suppressant |
| 0.4 wt% | biocide |
| 0.5 wt% | defoamer |
| balance | water |

### Example 15

| | |
|---|---|
| 8 wt% | Furnace carbon black |
| 30 wt% | calcium carbonate |
| 2 wt% | B-1 |
| 6 wt% | C-1 |
| 3 wt% | D-1 |
| 1 wt% | foam suppressant |
| 0.4 wt% | biocide |
| 0.5 wt% | defoamer |
| balance | water |

### Example 16

| | |
|---|---|
| 8 wt% | Furnace carbon black |
| 30 wt% | calcium carbonate |
| 2 wt% | B-1 |
| 6 wt% | lecithin |
| 3 wt% | D-1 |
| 1 wt% | foam suppressant |
| 5 wt% | PEG 400 |

| | |
|---|---|
| 0.4 wt% | biocide |
| 0.5 wt% | defoamer |
| balance | water |

### Examples 9a to 16a

The compositions of examples 9a to 16a correspond to those of examples 9 to 16 apart from the fact that they contain the same amount of B-2 instead of B-1.

### Example 17

| | |
|---|---|
| 40 wt% | Irgalite Yellow® L 1254 HD |
| 3 wt% | B-3 |
| 4 wt% | C-1 |
| 7 wt% | D-2 |
| 1 wt% | foam suppressant |
| 4 wt% | PEG 400 (humectant) |
| 0.4 wt% | biocide |
| 0.5 wt% | defoamer |
| balance | water |

### Example 18

| | |
|---|---|
| 40 wt% | Irgalite Yellow® L 1254 HD |
| 3 wt% | B-3 |
| 4 wt% | Lecithin |
| 7 wt% | D-2 |
| 1 wt% | foam suppressant |
| 0.4 wt% | biocide |
| 0.5 wt% | defoamer |
| balance | water |

### Example 19

| | |
|---|---|
| 55 wt% | Bayferrox® 3920 |
| 1.8 wt% | B-3 |
| 4 wt% | C-1 |
| 4.2 wt% | D-2 |
| 1 wt% | foam suppressant |
| 4 wt% | PEG 400 |
| 0.4 wt% | biocide |
| 0.5 wt% | defoamer |
| balance | water |

### Example 20

| | |
|---|---|
| 55 wt% | Bayferrox® 3920 |
| 1.8 wt% | B-3 |
| 4 wt% | Lecithin |
| 4.2 wt% | D-2 |
| 1 wt% | foam suppressant |
| 0.4 wt% | biocide |
| 0.5 wt% | defoamer |
| balance | water |

### Example 21

| | |
|---|---|
| 60 wt% | Titanium dioxide |
| 5 wt% | calcium carbonate |
| 1.8 wt% | B-3 |
| 4 wt% | C-1 |
| 4.2 wt% | D-2 |
| 1 wt% | foam suppressant |
| 4 wt% | PEG 400 |
| 0.4 wt% | biocide |
| 0.5 wt% | defoamer |
| balance | water |

### Example 22

| | |
|---|---|
| 60 wt% | Titanium dioxide |
| 5 wt% | calcium carbonate |
| 1.8 wt% | B-3 |
| 4 wt% | Lecithin |
| 4.2 wt% | D-2 |
| 1 wt% | foam suppressant |
| 0.4 wt% | biocide |
| 0.5 wt% | defoamer |
| balance | water |

### Example 23

| | |
|---|---|
| 8 wt% | Furnace carbon black |
| 30 wt% | calcium carbonate |
| 1.5 wt% | B-3 |
| 6 wt% | C-1 |
| 3.5 wt% | D-2 |
| 1 wt% | foam suppressant |
| 0.4 wt% | biocide |
| 0.5 wt% | defoamer |

| | |
|---|---|
| balance | water |

### Example 24

| | |
|---|---|
| 8 wt% | Furnace carbon black |
| 30 wt% | calcium carbonate |
| 1.5 wt% | B-3 |
| 6 wt% | lecithin |
| 3.5 wt% | D-2 |
| 1 wt% | foam suppressant |
| 5 wt% | PEG 400 |
| 0.4 wt% | biocide |
| 0.5 wt% | defoamer |
| balance | water |

### Application systems:

(1) Waterborne emulsion paint based on styrene/acrylate, with a white pigment content of 16.4 wt% (TiO₂, Kronos® 2043) (test binder 00-1067, BASF)
(2) Aromatics-free, air-drying white alkyd gloss paint (60-69 wt% solids fraction), aliphatic solvents (Rubbol; Akzo Nobel)
(3) Water-repellant spreadable silicate-based masonry paint (Granital®, Keim), TiO₂ pigment content 15.2 wt%
(4) low-VOC/SVOC emulsion paint based on Acronal® DS 6282X (pigment volume concentration 41%)

The pigment preparations of Examples 1 to 24, 1a to 8a, 1b to 8b, 9a to 16a, 2c, 4c, 6c and 8c were added to the application systems (1) to (3) in each case in a dispenser (Corob™ D410):
Dispenser: Corob™ D410, minimum metering quantity 0.1 ml; pump accuracy 0.01 ml

### Test 1: Calibration of the 0.1 ml metering directly after introduction

Even after direct metering of 0.1 ml after introduction, deviations only of 10% at most were found by measurement. This figure is frequently not achieved until after a waiting time of 1 day.

### Test 2: Reproducibility

Even after 8 weeks, the accuracy of the 0.1 ml metering remained < 10%. Under the storage conditions of the dispenser and in the containers, the paste remained unchanged. No change was observed in the rheology, and no sedimentation of the pigment component; the coloristic properties remained unchanged (change in color strength after 8 weeks ΔE < 0.5).

The color strength of the pigment preparations was determined by colorimetry as a white reduction (Datacolor SF600; standard illuminant D65). For this purpose, a mixture of 2.5 of each of examples 1 to 24, 1a to 8a, 1b to 8b, 9a to 16a, 2c, 4c, 6c and 8c and 50 g of application system 1 was homogenized in a plastic beaker, using a highspeed stirrer at 1500 rpm, for 3 minutes. The paint obtained was then drawn down using a 100 µm coil blade onto black/white test cardboard, and dried for 30 min.

### Test 3: Conditioning of the dispenser as a whole at 35°C

The metering properties were retained for each of the Examples.

### Test 4: Drying of the pigment preparations in the nozzles

Recordings of the nozzles made with a video camera during the metering operations showed no significant drying of the pigment preparations on and in the nozzles even after 8 weeks (metering 1 ×/week). No hanging drops were observed either.

### Test 5: VOC/SVOC measurement

10 wt% of each of the pigment preparations of Examples 1 to 24, 1a to 8a, 1b to 8b, 9a to 16a, 2c, 4c, 6c and 8c (based on the total weight of pigment preparation and application system) were added to application system (4). The VOC and SVOC contents were determined by chamber emission method according to DIN EN ISO 16000. Measurements were made of the VOC and SVOC values after 3 and after 28 days, with the following requirements concerning the air:
VOC <10 mg/m³ after 3 days and < 1 mg/m³ after 28 days
SVOC < 0.1 mg/m³ after 28 days
All of the examples met the requirements.

### Test 6: Rubout test

The rubout test in accordance with DE-A-2202527 was carried out for examples 1 to 24, 1a to 8a, 1b to 8b, 9a to 16a, 2c, 4c, 6c and 8c, in each case in all four application systems. In no case was any change in shade observed.

## Claims

1. A pigment preparation containing, based in each case on the total weight of the preparation,
(A) 1 to 80 wt% of a pigment component containing a pigment and optionally a filler;
(B) 0.01 to 10 wt% of a water-soluble additive containing at least one polyamine B, which is selected from the group consisting of poly-C₂-C₃-alkyleneimines, poly-C₂-C₃-alkyleneimines modified by poly-(C₂-C₄-alkyleneether) groups, poly-C₂-C₃-alkyleneimines modified by poly-(C₂-C₄-alkyleneether) groups and ester groups, poly-(C₂-C₄-alkyleneether) modified melamines and mixtures thereof;
(C) 0.01 to 8 wt% of an additive based on a lecithin and/or an anionic additive based on a phosphoric ester and/or phosphonic ester;
(D) 0 to 20 wt% of further additives for producing an aqueous pigment preparation; and
(E) water,
where the sum of the percentages by weight of components (A) to (E) makes 100 wt%.

2. The pigment preparation according to claim 1, where the combination of (B) and (C) consisting of (B) being modified melamines and (C) being an anionic additive based on a phosphoric ester and/or phosphonic ester is excluded.

3. The pigment preparation according to claim 1 or 2, wherein the polyamine B is selected from polyethyleneimines and poly-(C₂-C₄-alkyleneether) modified polyethyleneimines.

4. The pigment preparation according to claim 1 or 2, wherein the polyamine B is selected from poly-(C₂-C₄-alkyleneether) modified melamines.

5. The pigment preparation according to at least one of the preceding claims,
wherein the component (C) is a phosphoric ester of formula
[R¹O-(A-O)_{y}]ₓ-PO(OH)₃₋ₓ (I),
wherein
R¹ is independently from one another linear or branched C₈-C₂₂-alkyl, C₈-C₂₂-alkenyl or phenyl, said alkyl, alkenyl or phenyl may be substituted one or more times with C₁-C₁₂-alkyl, styryl or methyl-substituted styryl,
A is selected from the group consisting of ethan-1,2-diyl and propan-1,2-diyl and combinations thereof;
x = 1 or 2; and
y is an integer having a number average value of 1 to 100.

6. The pigment preparation according to claim 5, where
R¹ is independently from one another C₈-C₂₂-alkyl, C₈-C₂₂-alkenyl, distyryl phenyl, tristyryl phenyl, dibutyl phenyl or tributyl phenyl,
x = 1; and
y is an integer having a number average value of 3 to 50.

7. The pigment preparation according to at least one of the preceding claims, wherein the component (C) contains a lecithin.

8. The pigment preparation according to at least one of the preceding claims, wherein the component (D) contains 0.01 to 15 wt% of a humectant (D1), based on the total weight of the pigment preparation.

9. The pigment preparation according to at least one of the preceding claims, wherein the component (D) contains 0.01 to 5 wt% of a nonionic dispersant (D2) based on polyethers, based on the total weight of the pigment preparation.

10. The pigment preparation according to at least one of the preceding claims, wherein the component (D) contains an oligomeric acid (D3), which has at least one COOH group which is obtainable by reacting a polyether of formula
R²-(O-A')_{z}OH (II),
where
R² is C₁-C₃₀-alkyl, preferably C₆-C₂₀-alkyl;
A' is selected from the group consisting of ethan-1,2-diyl and propan-1,2-diyl and combinations thereof;
z is an integer having a number average value of 3 to 10;
with an organic polycarboxylic acid comprising 2, 3 or 4 COOH groups or an anhydride thereof.

11. The pigment preparation according to at least one of the preceding claims, wherein the volatile organic compounds (VOC) level is less than 1000 ppm.

12. The pigment preparation according to at least one of the preceding claims, wherein the pigment preparation is a paste, which paste has a viscosity of less than 3000mPa.s, measured using a cone/plate rheometer at a shear rate of 20 sec⁻¹.

13. A method for producing the pigment preparation according to at least one of claims 1 to 12, where first of all components (A) to (C) and at least part of component (D) are introduced into water, the resulting suspension is subjected to wet comminution, and optionally the remaining amount of component (D) is subsequently added to the suspension.

14. The use of the pigment preparation according to at least one of the claims 1 to 12, for coloring a coating material, preferably a varnish, a paint or a render, more preferably for point-of-sale tinting or in in-plant tinting systems.

## Patentansprüche

1. Pigmentpräparation, enthaltend, jeweils bezogen auf das Gesamtgewicht der Präparation,
(A) 1 bis 80 Gew.-% einer Pigmentkomponente, die ein Pigment und gegebenenfalls einen Füllstoff enthält;
(B) 0,01 bis 10 Gew.-% eines wasserlöslichen Additivs, dass mindestens ein Polyamin B enthält, das aus der Gruppe bestehend aus Poly-C₂-C₃-alkyleniminen, durch Poly(C₂-C₄-alkylenether)-Gruppen modifizierten Poly-C₂-C₃-alkyleniminen, durch Poly (C₂-C₄-alkylenether)-Gruppen und Estergruppen modifizierten Poly-C₂-C₃-alkyleniminen, durch Poly(C₂-C₄-alkylenether)-Gruppen modifizierten Melaminen und Mischungen davon ausgewählt ist;
(C) 0,01 bis 8 Gew.-% eines Additivs auf Basis eines Lecithins und/oder eines anionischen Additivs auf Basis eines Phosphorsäureesters und/oder Phosphonsäureesters;
(D) 0 bis 20 Gew.-% weitere Additive für die Herstellung einer wässrigen Pigmentpräparation und
(E) Wasser,
wobei die Summe der Gewichtsprozente der Komponenten (A) bis (E) 100 Gew.-% ergibt.

2. Pigmentpräparation nach Anspruch 1, wobei die Kombination von (B) und (C), die aus (B) modifizierten Melaminen und (C) einem anionischen Additiv auf auf Basis eines Phosphorsäureesters und/oder Phosphonsäureesters besteht, ausgeschlossen ist.

3. Pigmentpräparation nach Anspruch 1 oder 2, wobei das Polyamin B aus Polyethyleniminen und Poly(C₂-C₄-alkylenether)-modifizierten Polyethyleniminen ausgewählt ist.

4. Pigmentpräparation nach Anspruch 1 oder 2, wobei das Polyamin B aus Poly (C₂-C₄-alkylenether) - modifizierten Melaminen ausgewählt ist.

5. Pigmentpräparation nach mindestens einem der vorhergehenden Ansprüche, wobei es sich bei der Komponente (C) um einen Phosphorsäureester der Formel
[R¹O-]A-O)_{y}]ₓ-PO(OH)₃₋ₓ (I)
handelt, wobei
R¹ unabhängig voneinander für ein lineares oder verzweigtes C₈-C₂₂-Alkyl, C₈-C₂₂-Alkenyl oder Phenyl steht, wobei das Alkyl, Alkenyl oder Phenyl ein- oder mehrfach mit C₁-C₁₂-Alkyl, Styryl oder methylsubstituiertem Styryl substituiert sein kann,
A aus der Gruppe bestehend aus Ethan-1,2-diyl und Propan-1,2-diyl und Kombinationen davon ausgewählt ist;
x = 1 oder 2 und
y für eine ganze Zahl mit einem zahlenmittleren Wert von 1 bis 100 steht.

6. Pigmentpräparation nach Anspruch 5, wobei
R¹ unabhängig voneinander für C₈-C₂₂-Alkyl, C₈-C₂₂-Alkenyl, Distyrylphenyl, Tristyrylphenyl, Dibutylphenyl oder Tributylphenyl steht;
x = 1 und
y für eine ganze Zahl mit einem zahlenmittleren Wert von 3 bis 50 steht.

7. Pigmentpräparation nach mindestens einem der vorhergehenden Ansprüche, wobei die Komponente (C) ein Lecithin enthält.

8. Pigmentpräparation nach mindestens einem der vorhergehenden Ansprüche, wobei die Komponente (D) 0,01 bis 15 Gew.-% eines Feuchthaltemittel (D1), bezogen auf das Gesamtgewicht der Pigmentpräparation, enthält.

9. Pigmentpräparation nach mindestens einem der vorhergehenden Ansprüche, wobei die Komponente (D) 0,01 bis 5 Gew.-% eines nichtionischen Dispergiermittels (D2) auf Basis von Polyethern, bezogen auf das Gesamtgewicht der Pigmentpräparation, enthält.

10. Pigmentpräparation nach mindestens einem der vorhergehenden Ansprüche, wobei die Komponente (D) eine oligomere Säure (D3) enthält, die mindestens eine COOH-Gruppe aufweist und durch Umsetzung eines Polyethers der Formel
R²-(O-A')_{z}OH (II),
wobei
R² für C₁-C₃₀-Alkyl, vorzugsweise C₆-C₂₀-Alkyl, steht;
A' aus der Gruppe bestehend aus Ethan-1,2-diyl und Propan-1,2-diyl und Kombinationen davon ausgewählt ist;
z für eine ganze Zahl mit einem zahlenmittleren Wert von 3 bis 10 steht;
mit einer organischen Polycarbonsäure mit 2, 3 oder 4 COOH-Gruppen oder einem Anhydrid davon erhältlich ist.

11. Pigmentpräparation nach mindestens einem der vorhergehenden Ansprüche, wobei der Gehalt an flüchtigen organischen Verbindungen (VOC) weniger als 1000 ppm beträgt.

12. Pigmentpräparation nach mindestens einem der vorhergehenden Ansprüche, wobei es sich bei der Pigmentpräparation um eine Paste mit einer eine Viskosität von 3000 mPa.s, gemessen mit einem Kegel/Platte-Rheometer bei einer Scherrate von 20 s⁻¹, handelt.

13. Verfahren zur Herstellung der Pigmentpräparation nach mindestens einem der Ansprüche 1 bis 12, wobei zunächst alle Komponenten (A) bis (C) und mindestens ein Teil von Komponente (D) in Wasser zugegeben werden, die entstehende Suspension einer Lastzerkleinerung unterworfen wird und gegebenenfalls der Suspension anschließend die restliche Menge an Komponente (D) zugegeben wird.

14. Verwendung der Pigmentpräparation nach mindestens einem der Ansprüche 1 bis 12 zum Einfärben von Lacken, Farben und Putzen, bevorzugt für das Abtönen am Point of Sale oder in betriebsinternen Abtönanlagen.

## Revendications

1. Préparation de pigment contenant, sur la base, en chaque cas, du poids total de la préparation,
(A) 1 à 80 % en poids d'un composant de type pigment contenant un pigment et éventuellement une charge ;
(B) 0,01 à 10 % en poids d'un additif soluble dans l'eau contenant au moins une polyamine B, qui est choisie dans le groupe constitué par des poly-C₂-₃-alkylèneimines, des poly-C₂-₃-alkylèneimines modifiées par des groupes poly-(C₂₋₄-éther d'alkylène), des poly-C₂₋₃-alkylèneimines modifiées par des groupes poly-(C₂₋₄-éther d'alkylène) et des groupes ester, des mélamines modifiées par un poly-(C₂₋₄-éther d'alkylène) et des mélanges correspondants ;
(C) 0,01 à 8 % en poids d'un additif à base d'une lécithine et/ou d'un additif anionique à base d'un ester phosphorique et/ou d'un ester phosphonique ;
(D) 0 à 20 % en poids d'additifs supplémentaires pour la production d'une préparation aqueuse de pigment ; et
(E) de l'eau,
dans laquelle la somme des pourcentages en poids des composants (A) à (E) donne 100 % en poids.

2. Préparation de pigment selon la revendication 1, dans laquelle la combinaison de (B) et (C) constitués par (B) étant des mélamines modifiées et (C) étant un additif anionique à base d'un ester phosphorique et/ou d'un ester phosphonique est exclue.

3. Préparation de pigment selon la revendication 1 ou 2, la polyamine B étant choisie parmi des polyéthylèneimines et des polyéthylèneimines modifiées par un poly-(C₂₋₄-éther d'alkylène).

4. Préparation de pigment selon la revendication 1 ou 2, la polyamine B étant choisie parmi des mélamines modifiées par un poly-(C₂₋₄-éther d'alkylène) .

5. Préparation de pigment selon au moins l'une des revendications précédentes, le composant (C) étant un ester phosphorique de formule
**[R¹O-(A-O)_{y}]ₓ-PO(OH)₃₋ₓ** (I),
R¹ étant indépendamment les uns des autres C₈₋₂₂-alkyle linéaire ou ramifié, C₈₋₂₂-alcényle ou phényle, ledit alkyle, alcényle ou phényle pouvant être substitué une ou plusieurs fois par C₁₋₁₂-alkyle, styryle ou styryle substitué par méthyle, A étant choisi dans le groupe constitué par éthane-1,2-diyle et propane-1,2-diyle et des combinaisons correspondantes ;
x = 1 ou 2 ; et
y étant un entier possédant une valeur moyenne en nombre de 1 à 100.

6. Préparation de pigment selon la revendication 5, dans laquelle
R¹ est indépendamment les uns des autres C₈₋₂₂-alkyle, C₈₋₂₂-alcényle, distyrylphényle, tristyrylphényle, dibutylphényle ou tributylphényle,
x = 1 ; et
y est un entier possédant une valeur moyenne en nombre de 3 à 50.

7. Préparation de pigment selon au moins l'une des revendications précédentes, le composant (C) contenant une lécithine.

8. Préparation de pigment selon au moins l'une des revendications précédentes, le composant (D) contenant 0,01 à 15 % en poids d'un humectant (D1), sur la base du poids total de la préparation de pigment.

9. Préparation de pigment selon au moins l'une des revendications précédentes, le composant (D) contenant 0,01 à 5 % en poids d'un dispersant non ionique (D2) à base de polyéthers, sur la base du poids total de la préparation de pigment.

10. Préparation de pigment selon au moins l'une des revendications précédentes, le composant (D) contenant un acide oligomérique (D3), qui possède au moins un groupe COOH qui peut être obtenu par mise en réaction d'un polyéther de formule
**R²-(O-A)_{z}OH** **(II),**
dans laquelle
R² est C₁₋₃₀-alkyle, préférablement C₆₋₂₀-alkyle ;
A' est choisi dans le groupe constitué par éthane-1,2-diyle et propane-1,2-diyle et des combinaisons correspondantes ;
z est un entier possédant une valeur moyenne en nombre de 3 à 10 ;
avec un poly(acide carboxylique) organique comprenant 2, 3 ou 4 groupes COOH ou un anhydride correspondant.

11. Préparation de pigment selon au moins l'une des revendications précédentes, le taux de composés organiques volatils (COV) étant inférieur à 1 000 ppm.

12. Préparation de pigment selon au moins l'une des revendications précédentes, la préparation de pigment étant une pâte, laquelle pâte possède une viscosité inférieure à 3 000 mPa.s, mesurée à l'aide d'un rhéomètre à cône/plaque à une vitesse de cisaillement de 20 s⁻¹.

13. Préparation de pigment selon au moins l'une des revendications 1 à 12, dans laquelle tout d'abord tous les composants (A) à (C) et au moins une partie du composant (D) sont introduits dans de l'eau, la suspension résultante est soumise à un broyage humide, et éventuellement la quantité restante de composant (D) est subséquemment ajoutée à la suspension.

14. Utilisation de la préparation de pigment selon au moins l'une des revendications 1 à 12, pour la coloration d'un matériau de revêtement, préférablement d'un vernis, d'une peinture ou d'un render, plus préférablement pour des teintures en point de vente ou dans des systèmes de teinture en usine.
